# EUROPÄISCHE PATENTSCHRIFT

(11) **EP 1 137 991 B1**
(45) Veröffentlichungstag und Bekanntmachung des Hinweises auf die Patenterteilung: **11.08.2010**
(21) Anmeldenummer: 00972587.0
(22) Anmeldetag: 09.09.2000
(51) Int. Cl.: G06F 12/06, G06F 9/445

(54) **VERFAHREN UND VORRICHTUNG ZUR STEUERUNG VON PROZESSEN IN EINEM FAHRZEUG**
METHOD AND DEVICE FOR CONTROLLING PROCESSES IN A VEHICLE
PROCEDE ET DISPOSITIF POUR LA COMMANDE DE PROCESSUS DANS UN VEHICULE

(30) Priorität: 11.10.1999 DE 19949048
(43) Veröffentlichungstag der Anmeldung: 04.10.2001
(73) Patentinhaber: ROBERT BOSCH GMBH, 70442 Stuttgart (DE)
(72) Erfinder: SOMMER, Rainer, 70499 Stuttgart (DE); STOBER, Markus, 71701 Schwieberdingen (DE); EGE, Taskin, 71732 Tamm (DE)
(86) Internationale Anmeldenummer: PCT/DE2000/003134
(87) Internationale Veröffentlichungsnummer: WO 2001/027769

(56) Entgegenhaltungen:
- DE-A- 19 712 731
- US-A- 4 908 792
- AL-RIAHI: "Software-controlled memory duplication" MICROPROCESSORS AND MICROSYSTEMS., Bd. 9, Nr. 1, Januar 1985 (1985-01), Seiten 21-23, XP000211828 IPC BUSINESS PRESS LTD. LONDON., GB ISSN: 0141-9331
- BAKER K: "INTERBANK FUNCTION CALLING IN ROM BANKS" ELECTRONIC DESIGN,US,PENTON PUBLISHING, CLEVELAND, OH, Bd. 44, Nr. 2, 22. Januar 1996 (1996-01-22), Seite 124,126 XP000582590 ISSN: 0013-4872
- TASKING SOFTWARE B.V.: "80166 Cross-Assembler Users Guide, Issue 5, Pages 3-4 and 9-4" 1 January 1999 (1999-01-01), , XP007908147

## Beschreibung

### Stand der Technik

Die Erfindung betrifft Verfahren und Vorrichtung zur Steuerung von Prozessen in einem Fahrzeug, insbesondere zur Steuerung eines Antriebs in einem Fahrzeug, gemäß den Oberbegriffen der unabhängigen Ansprüche.

Die Adressräume gängiger Rechner sind in mehrere Segmente gleicher Größe, beispielsweise 64 KByte, aufgeteilt. Im Programmablauf ist ein Wechsel von einem Codesegment zum nächsten im Zuge einer Interruptbearbeitung mit explizitem Befehl möglich. Beispielsweise aus dem 80166 Cross-Assembler Users Guide von Tasking Software B. V. auf Seite 3-4 und 9-4 sind die einzelnen Funktionen einer Motorsteuerung als Programmteile, sogenannte Programmsektionen programmiert. Für jede Interrupt- oder Rechenebene werden diese Programmteile direkt hintereinander sektioniert. Beim Wechsel von einer Sektion zur nächsten gibt es keinen Sprungbefehl. Damit müssen die sektionierten Programmteile innerhalb eines Segmentes für den Programmcode liegen.

Aufgrund des genannten Standes der Technik ist eine Realisierung verschiedener Motorsteuerungsfunktionen als Unterprogramme und Aufruf dieser Unterprogramme in einer oder mehrerer sektionierter Programmsequenzen durchführbar. Damit liegt der eigentliche umfangreiche Programmcode in einem beliebigen Segment und lediglich die kleinen Unterprogrammaufrufe müssen in das Codesegment, bzw. Segment, beispielsweise der Größe 64 KByte passen, in dem die restlichen sektionierten Programmteile zusammengehöriger Steuerfunktionen der Motorsteuerung liegen.

Die Druckschrift "Software-controlled memory duplication", Microprcessors and Microsystems, Bd.9, No. 1, Januar 1985 von Al-Riahi beschreibt ein Verfahren zur softwaregesteuerten Speichervervielfältigung. Darin ist eine Speicherbank beschrieben, die aus einer Anzahl von Speicherbausteinen besteht, die von einem Steuerschaltkreis angesteuert werden. Der Steuerschaltkreis besteht aus einer Adresssteuereinheit, die ein Flipflop ansteuert, das zusammen mit einem Adressdecoder eine Gruppe von NAND-Gattern antreibt.

Die Druckschrift "Interbank Function Calling In ROM Banks" Electronic Design, Bd. 44, Nr. 2, 22. Januar 1996 von K. Baker beschreibt ein Verfahren, bei dem die Begrenzung des Adressraums eines Mikroprozessors umgangen werden soll. Hierzu wird eine Zwischen-Bank-Funktion eingesetzt.

Es hat sich gezeigt, dass der genannte Stand der Technik nicht in jeder Hinsicht optimale Ergebnisse zu liefern vermag. So müssen auch bei den Unterprogrammaufrufen diese und zusätzliche sektionierte Programmteile zusammengehöriger Motorfunktionen innerhalb eines Codesegmentes angeordnet werden. Bei leistungsfähigen Steuerungen, insbesondere bei der Steuerung von Prozessen in Verbindung mit einer Brennkraftmaschine, wird die Codesegmentgrenze, der beispielsweise 64 KByte, von verschiedenen Rechenebenen gesprengt, also überschritten.

Auch ein einfacher Ausbau schon vorhandener Funktionen durch Hinzufügen weiterer Sektionen, welche Programmcode bzw. Programmteile neu hinzuzunehmender Steuerfunktionen beinhalten, stößt dabei bald an die vorgegebene Codesegmentgrenze bzw. überschreitet diese. Durch eine interne Adressierung der Prozessoreinheit (CPU) von beispielsweise 16 bit ist eine beliebige Ausweitung der Segmente und somit des Umfangs des Programmcodes und der Steuerfunktionen nicht möglich.

Damit ergibt sich die Aufgabe einer Verknüpfung von Programmcode beziehungsweise Programmteilen, die zu zusammengehörenden Steuerungsfunktionen gehören, auch wenn diese die maximal mögliche Segmentgrenze von beispielsweise 64 KByte bei 2 hoch 16 bit Adressiermöglichkeit übersteigen.

Dieses Problem stellt sich selbstverständlich auch für größere und kleinere Codesegmente beispielsweise bei einer Adressiermöglichkeit mit z. B. 4,..., 8,...,12,...,16, ..., 24,..., 32, usw. bit.

### Vorteile der Erfindung

Die Erfindung beschreibt Verfahren und Vorrichtung zur Steuerung von Prozessen in einem Fahrzeug, insbesondere zur Steuerung eines Antriebs in einem Fahrzeug, durch wenigstens einen Prozessor wobei Steuerfunktionen in Form von Programmcode in einem durch den Prozessor adressierbaren Adressraum in wenigstens einem Speicher abgelegt werden, wobei der Adressraum in Segmente gleicher Länge eingeteilt ist und der Programmcode in Programmteilen je Steuerfunktion in einzelnen aneinandergereihten Sektionen im Segment abgelegt wird. Um die maximale Segmentgröße mit zusammengehörigen Steuerfunktionen beziehungsweise deren Programmcode überschreiten zu können werden vorteilhafter Weise wenigstens zwei Segmente derart verknüpft, dass eine Sektion eines ersten Segmentes ein Aussprunglabel, also einen Aussprungbefehl oder ein Aussprungprogramm bzw. -programmsequenz, aus dem ersten Segment beinhaltet und eine zweite Sektion in dem zweiten Segment einen Einsprunglabet, also einen Einsprungbefehl oder ein Einsprungprogramm bzw. - programmsequenz beinhaltet und Ein-/ und Aussprunglabel so miteinander verknüpft sind, dass vom ersten Segment in das zweite Segment übergegangen wird. Dabei können alle Programmteile bzw. Sektionen für Steuerungsfunktionen unverändert ohne Sprungbefehle bzw. Sprunglabel programmiert werden. Diese Klammerung wenigstens zweier Codesegmente ermöglicht somit die Verwendung zusammengehöriger Steuerfunktionen beziehungsweise deren Programmcode in nahezu beliebigem Umfang über die Segmentgrenzen hinaus.

Vorteilhafter Weise wird das Aussprunglabel in der letzten Sektion des ersten Segmentes programmiert und/oder das Einsprunglabel in der ersten Sektion des zweiten Segmentes. Damit wächst der Programmcode im ersten Segment vom Segmentende zum Segmentanfang und im zweiten Segment in der Gegenrichtung vom Segmentanfang zum Segmentende. Es werden also die Sektionen, die den Programmcode enthalten, entsprechend der darin abgelegten Steuerfunktionen beziehungsweise Programmteile in den Segmenten entgegengesetzt aneinander gereiht, wodurch bei der Klammerung zweier Segmente die doppelte Segmentgröße zur Verfügung steht. Dieses Verfahren funktioniert zweckmäßiger Weise natürlich auch für mehr als zwei Codesegmente bzw. Segmente und mehr als eine Interrupt-1 Rechenebene. Dabei ist es auch nicht notwendig, dass die betroffenen Codesegmente im Adressraum direkt hintereinander liegen.

Die Segmente sind dabei nicht zwingend im gleichen Speicherbereich oder dem gleichen Speicher abgelegt. Die Einteilung in Segmente bezieht sich auf die Adressierfähigkeit des Prozessors. Dies bedeutet, dass der Prozessor einen Adressraum adressiert, der wenigstens einen aber auch mehrere verschiedene physikalische Speicher umfassen kann, also einen eigenen, virtuellen Speicher festlegt. Dieser Adressraum bzw. Speicher ist dabei durch die Adressierfähigkeit des Prozessors in Segmente maximaler Größe unterteilt.

Vorteilhafter Weise umfasst das Einsprunglabel sowie das Aussprunglabel jeweils eine komplette Sektion in jeweils einem Codesegment wodurch diese einfach an die bestehenden Sektionen angefügt werden kann beziehungsweise einfach von diesen Spezialsektionen (Einsprung- und/oder Aussprunglabel) aus mit der Programmierung gestartet werden kann und keine Berücksichtigung der Label (Einsprung- und/oder Aussprunglabel) im weiteren Programmcode der Steuerfunktionen stattfinden muss.

Vorteilhafter Weise können so alle Programmteile beziehungsweise der Programmcode, also die Sektionen für die Steuerungsfunktionen nach den gängigen Softwareentwicklungsmethoden programmiert und integriert werden, ohne dass eine weitere Anpassung erfolgen muss. So müssen auch bestehende Softwaremodule nicht erneut angepasst werden. Diese sind weiterhin für kleine Systeme, also Systeme mit Programmcode in einem Segment, wie auch für große Systeme, also Systeme mit Überschreitung der Codesegmentgrenzen, verwendbar.

Weiterhin von Vorteil ist, dass es keine iterative Nachbearbeitung, beispielsweise zur Einfügung von Sprung und Sprunglabel, Compilieren, Assemblieren, Testen usw. von unter Umständen zwei oder mehr Steuerungsfunktionen pro Programmstand geben muss. Auch eine iterative Umwandlung von Steuerungsfunktionen zu Unterprogrammen oder ähnlichem, wie im Stand der Technik wird zweckmäßiger Weise nicht durchgeführt, wodurch also kein Bedarf für einen erneuten Test oder eine erneute Überprüfung des Programmstandes besteht.

Alle Vorteile der Sektionierung gegenüber einer ausschließlichen Unterprogrammtechnik können somit erhalten bleiben, wie zum Beispiel die modulare Programmierung, die Einsparung von Rechenlaufzeit und Programmspeicherplatz, womit letztlich Ent-wicklungs- und Steuergerätekosten gesenkt werden.

Somit kann vorteilhafter Weise die Verteilung des Programmcodes auf die Codesegmente ausschließlich im Software-Integrationsprozess beeinflusst werden. Der Modul-Realisierungsprozess für die Software ist davon unbeeinflusst. Dies bedeutet schon vor dem eigentlichen Entwicklungsprozess kann in einer Aufgabenverteilung für die Steuerung die Steuerfunktionsverteilung festgelegt werden und ist vorteilhafter Weise nachträglich für einen neuen Programmstand auch erweiterbar.

Bei einer drohenden Überschreitung der erweiterten Codesegmentgrenzen kann einmal durch geeignete Linker/Lokater-Anweisungen sichergestellt werden, dass es nicht zu versehentlichem ungewollten Überschreiten kommt. Andererseits kann durch Hinzuklammern eines weiteren Segmentes diese Überschreitung direkt vermieden werden.

Weitere Vorteile und vorteilhafte Ausgestaltungen ergeben sich aus der Beschreibung und den Ansprüchen.

### Zeichnung

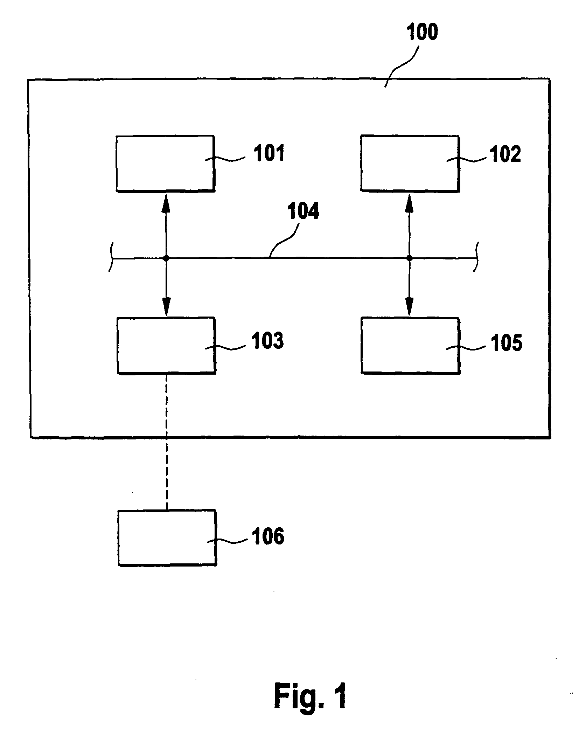

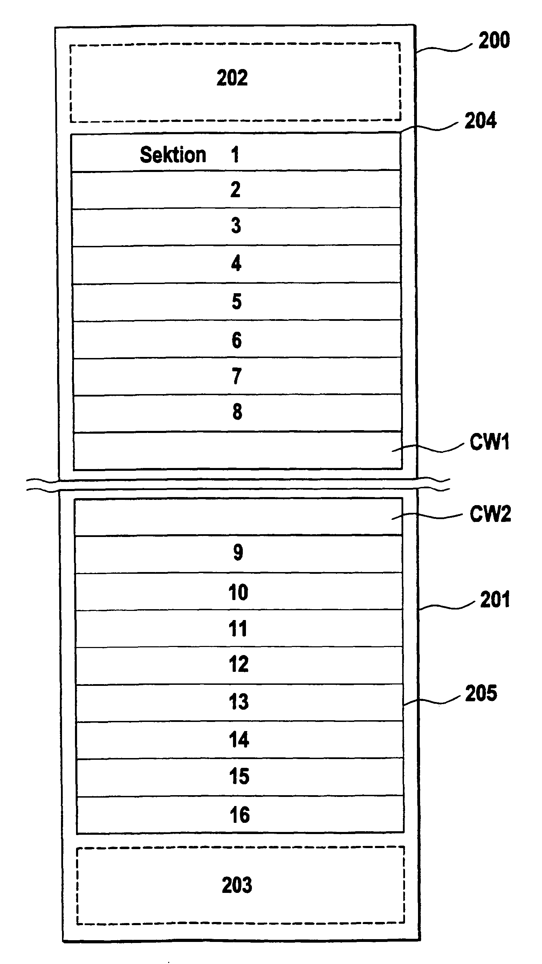

Die Erfindung wird nachfolgend anhand der in der Zeichnung dargestellten Figuren näher erläutert. Dabei zeigt Figur 1 die zur Darstellung der Erfindung notwendigen Teile in einem Steuergerät mit einer Prozessoreinheit und wenigstens einem Speicher. Figur 2 zeigt dabei zwei Segmente in wenigstens einem Speicher die erfindungsgemäß durch die Label geklammert sind.

### Beschreibung der Ausführungsbeispiele

In Figur 1 ist mit 100 ein Steuergerät bezeichnet, welchem beispielsweise über die dargestellte Ein-/Ausgangsbaugruppe 103 Signale zugeführt werden, welche gemessene Betriebsgrößen der Antriebseinheit, des Triebstrangs und/oder des Fahrzeugs repräsentieren oder aus welchen solche Betriebsgrößen abgeleitet werden können. Insbesondere sind dies Betriebsgrößen, die zur Steuerung einer

Antriebseinheit, insbesondere einer Brennkraftmaschine ausgewertet werden können. Über diese Baugruppe 103 werden ferner Signale ausgegeben, welche Stellelemente beziehungsweise Aktuatoren zur Einstellung wenigstens einer Betriebsgröße des Fahrzeugs, insbesondere einer Antriebseinheit betätigen. Diese Ein-/Ausgabeeinheit 103 kann auch getrennt in Form einer Eingabeeinheit und einer Ausgabeeinheit ausgeführt sein.

In Abhängigkeit der Eingangssignale, daraus abgeleiteter Betriebsgrößen und/oder interner Größen bildet die Prozessoreinheit 101 im Rahmen der in wenigstens einem Speicher 102 implementierten Programme beziehungsweise Steuerfunktionen in Form von Programmcode, Werte für die auszugebenden Steuergrößen, die die Stellelemente im Sinne einer vorgegebenen Steuer- beziehungsweise Regelstrategie einstellen. Die Steuereinheit 100 kann dabei zur Getriebesteuerung, Steuerung des Fahrwerks (ABS, ASR, ESP, usw.), insbesondere der Bremse, Steuerung von Komfort- und Sicherheitselektronik, usw. dienen.

Da es sich bei dem Steuergerät 100 aber bevorzugter Weise um eine Steuereinheit zur Steuerung einer Antriebseinheit, insbesondere einer Brennkraftmaschine eines Fahrzeugs handelt, wird beispielsweise in bekannter Weise die Stellung eines vom Fahrer betätigbaren Bedienelementes erfaßt, ausgewertet und ein Sollwert für ein Drehmoment der Antriebseinheit ermittelt. Dies führt dann unter Berücksichtigung von über die Ein-/Ausgangsbaugruppe 103 empfangenen Sollwerten anderer Steuersysteme, wie beispielsweise einer Antriebsschlupfregelung, einer Getriebesteuerung, usw. sowie intern gebildeter Sollwerte (Begrenzungen, etc.) zur Ermittlung eines Sollwerts z.B. für das Drehmoment. Dieses wird dann im bevorzugten Ausführungsbeispiel einer Brennkraftmaschinensteuerung in einen Sollwert für die Stellung der Drosselklappe, der im Rahmen eines Lageregelkreises eingestellt wird, umgewandelt. Ferner sind je nach Ausstattung der Brennkraftmaschine weitere leistungsbestimmende Funktionen vorgesehen, beispielsweise Steuerung eines Turboladers einer Abgasrückführung, einer Leerlaufdrehzahlregelung, usw.

Darüber hinaus sind bei Brennkraftmaschinen mit Benzindirekteinspritzung nicht nur die Lufteinstellung, sondern auch die Bestimmung der einzuspritzenden Kraftstoffmasse, die Bestimmung eines einzustellenden Luft/Kraftstoffverhältnisses, die Vorgabe des Einspritzverlaufes (Voreinspritzung, Nacheinspritzung), die Steuerung einer Ladungsbewegungsklappe, usw. leistungsbestimmend, so daß dort neben den geschilderten eine Vielzahl weiterer Programme beziehungsweise Steuerfunktionen vorzusehen sind, die Einfluß auf die Leistung der Brennkraftmaschine und somit auf die Sicherheit des Fahrzeugs haben.

Neben der Verwendung der Erfindung zur Antriebssteuerung ist diese wie erwähnt auch für alle anderen Prozesse in einem Fahrzeug denkbar. Das bedeutet, wie für die Brennkraftmaschinensteuerung beschrieben, sind weitere Steuervorgänge beispielsweise des Fahrwerks, insbesondere der Bremse, des Getriebes, der Komfortelektronik, wie Fensterheber oder Türschlösser, usw. denkbar.

Diese Vielzahl an Steuerfunktionen beziehungsweise Programmen ist in Form eines Programmcodes in den jeweiligen Programmspeichern 102 und 105 beziehungsweise 106 abgelegt oder dorthin ladbar. Dabei kann mit Speicher 102 beispielsweise ein nichtflüchtiger und mit Speicher 105 ein flüchtiger Speicher beschrieben sein. Diese Speicher 102, 105 sowie die Ein-/Ausgangsbaugruppe 103 und die Prozessoreinheit (CPU) 101 ist über ein internes Bussystem 104 verknüpft. Optional können weitere Bauelemente und/oder Baugruppen an das Bussystem 104 angekoppelt sein. Diese zusätzlichen optionalen Elemente sind beispielsweise zusätzliche Speicherelemente, zusätzliche Ein/Ausgangsschnittstellen, weitere Prozessoreinheiten usw. Der Speicher 106 ist optional und zum Steuergerät 100 extern und kann sich beispielsweise in einem weiteren Steuergerät, einem intelligenten Sensor, einem Signalprozessor, usw. befinden.

Prozessor 101 verfügt dabei über eine interne Adressierung, einem Autoinkrement bestimmter Bitzahl. Durch diese interne Adressierung ist die Größe der Codesegmente in den einzelnen durch die CPU 101 adressierbaren Speichern festgelegt. Bei einem Autoinkrement von beispielsweise 16 Bit ist somit eine Codesegmentgröße von 64 KB vorgegeben. Auch bei möglicherweise höherer Bitzahl für die Adressierung, also möglichen größeren Codesegmenten tritt im Laufe der Entwicklung immer wieder der Fall auf, daß die bisherige Segmentgröße dem neuen Funktionsumfang der Steuerfunktionen nicht entspricht, und diese überschritten würde. Durch die Hinzunahme immer neuer Steuerfunktionen und Funktionsumfänge tritt dies immer früher ein. Immer mehr zusammengehörige Funktionen,wie beispielsweise eine Funktion 1, Lambdaregelung, eine Funktion 2, Zündberechnung mit Zündwinkel und Klopfregelung, eine Funktion 3, Start, mit ihren immer komplexer werdenden Hierarchieebenen bzw. Teilfunktionen sprengen die vorgegebenen Codesegmentgrenzen. Die Feinheit und Hierarchietiefe dieser Funktionen ist dabei nahezu beliebig.

Die Segmente sind dabei nicht zwingend im gleichen Speicherbereich oder dem gleichen Speicher abgelegt. Die Einteilung in Segmente bezieht sich auf die Adressierfähigkeit des Prozessors. Dies bedeutet, daß der Prozessor einen Adressraum adressiert, der wenigstens einen aber auch mehrere verschiedene physikalische Speicher 102, 105, 106 umfassen kann, also einen eigenen, virtuellen Speicher festlegt. Dieser Adressraum bzw. Speicher ist dabei durch die Adressierfähigkeit des Prozessors in Segmente unterteilt. Die Klammerung einzelner, wenigstens zweier Segmente kann dann als Folge nach sich ziehen, daß der Einsprung- und der Aussprunglabel in einem Speicher programmiert wird. Vorteilhafter Weise befindet sich die Nahtstelle, wie in Figur 2 dargestellt somit im gleichen Speicher.

Figur 2 zeigt nun eine erfindungsgemäße Lösung dieses Problems. Dabei ist mit 200 ein erstes Codesegment in einem ersten Speicher, beispielsweise 102 dargestellt. Mit 201 ist ein zweites Codesegment beziehungsweise Segment entweder im selben Speicher oder einem weiteren Speicher beispielsweise 105 oder 106 dargestellt. In den Segmenten werden Sektionen mit Programmcode der Steuerfunktionen aneinandergereiht. Bei umfangreichen Funktionen kann die jeweilige Funktion auch zwei oder mehr Sektionen abhängig von der Hierarchietiefe überlagern. Die aneinandergereihten Sektionen in einem ersten Segment sind in Block 204 in Segment 200 dargestellt. Der durch Sektionen noch nicht belegte Speicherplatz ist als freier Speicher 202 gestrichelt ebenfalls im Codesegment 200 dargestellt. Je nach Programmier- bzw. Beschreibrichtung des Speichers, kann sich der freie Speicher am Anfang oder Ende befinden.

Eine Sektionierung des Programmcodes kann dabei einerseits über eine Zeitebene, also zeitsynchron erfolgen oder andererseits ereignissynchron beispielsweise drehzahl- oder kurbelwellensynchron. Sektion 1 in Figur 2 umfaßt beispielsweise eine Funktion 1, beispielsweise die Lambdaregelung. Sektion 2, 3 und 4 kann eine Funktion 2 beispielsweise eine Zündberechnung umfassen. Dabei wird in Sektion 4 z.B. eine Klopfregelung, in Sektion 3 z.B. eine Zündwinkelberechnung und in Sektion 2 die Koordination der Zündberechnung durchgeführt. Die Sektionen 5 bis 8 enthalten weitere Steuerfunktionen beziehungsweise den zugehörigen Programmcode, beispielsweise eine Funktion 3, Start. Soll nun bei gänzlich gefülltem Codesegment, der gestrichelt dargestellte freie Speicher 200 wäre dann zu klein für weitere Funktionen oder nicht mehr vorhanden, eine weitere Steuerfunktion beziehungsweise der zugehörige Programmcode hinzugefügt werden, stößt man auf die vorgenannten Probleme.

Zur Abhilfe wird mit CW1 eine Sektion als Aussprunglabel im ersten Segment programmiert. Ebenso wird ein Einsprunglabel CW2 in einem zweiten beliebig lokalisierbaren Segment 201 programmiert. Sollen neue Steuerfunktionen 9 bis 16 beispielsweise im Zuge einer Weiterentwicklung angefügt werden, können diese, wenn beispielsweise die Sektionszahl oder deren Umfang für die nächste Steuerfunktion die Speichermöglichkeit im freien Speicher 202 überschreitet in einem zweiten Codesegment 201 hinzugefügt werden. Die Klammerung beziehungsweise Verbindung der Codesegmente erfolgt somit durch die Aussprung- und Einsprunglabel CW1 und CW2.

Die Erfindung ermöglicht somit, daß alle Programmteile beziehungsweise Sektionen für Steuerungsfunktionen unverändert ohne Sprungbefehle beziehungsweise Sprunglabel programmiert werden können und das entstandene Gesamtsystem um zwei einmalig zu programmierende Sektionen, die eine Klammerung des Codesegmentwechsels bewirken ergänzt wird. Die Programmierung kompletter Sektionen als Einsprung- und Aussprunglabel hat den Vorteil, daß in einer Steuerfunktionssektion diese Sprunglabel, insbesondere Sprungbefehle mit Einsprung- bzw. Aussprungadresse, nicht berücksichtigt werden müssen und so der Entwicklungsablauf, beziehungsweise die Aufgabenverteilung flexibel ohne Berücksichtigung der Codesegmentgrenzen und Label erfolgen kann. Mit 203 ist im Codesegment 201 der darin befindliche freie Speicher dargestellt. Die aneinandergereihten Sektionen sind in Block 205 zusammengefaßt.

Natürlich können die Label aber auch in einer Sektion mit weiterem Programmcode für Steuerfunktionen zusammen programmiert werden.

Besonders vorteilhaft ist es, wie in Figur 2 dargestellt die Sektionen mit den Einsprung- bzw. Aussprunglabeln nicht irgendwo in den jeweiligen Codesegmenten 200 bzw. 201 abzulegen sondern die das Aussprunglabel beinhaltende oder darstellende Sektion CW1 des ersten Segmentes an das Ende des ersten Segmentes 200 und die das Einsprunglabel enthaltende oder darstellende Sektion CW2 des Segmentes 201 an den Anfang dieses Segmentes 201 also den Beginn des zweiten Codesegmentes zu legen. Damit steht schon zu Beginn eine in diesem Fall doppelte Codesegmentgröße zur Verfügung und die zusammengehörigen Steuerfunktionen können in Form ihres Programmcodes je nach Notwendigkeit oder Wunsch im ersten und/oder zweiten Codesegment abgelegt werden. Damit wächst der Programmcode im ersten Codesegment nach oben und im zweiten nach unten. Der freie Speicher liegt dann, wie in Figur 2 dargestellt an den jeweiligen Enden der Codesegmente also hier 202 und 203. So kann bei der ersten Sektion hier Sektion 1 begonnen werden und die Funktionen können nacheinander bis Sektion 16 ohne Sprungbefehl zwischen den einzelnen Sektionen durchgeführt werden. Obwohl der gesamte Steuerfunktionsumfang von Sektion 1 bis 16 die Codesegmentgröße deutlich überschreitet. Dabei bleiben die Vorteile der Sektionierung, wie Laufzeitvorteile durch weniger Sprungbefehle beispielsweise in Verbindung mit einem Cash und möglichst kleine funktionsorientierte Modulbildung erhalten.

## Patentansprüche

1. Verfahren zur Steuerung von Prozessen in einem Fahrzeug, insbesondere zur Steuerung eines Antriebs in dem Fahrzeug, durch wenigstens einen Prozessor (101), wobei Steuerfunktionen in Form von Programmcode in einen über den Prozessor (101) adressierbaren Adressraum in wenigstens einem Speicher (102, 202) abgelegt werden, wobei der wenigstens eine Adressraum in Segmente (200, 201) gleicher Länge eingeteilt ist und der Programmcode in einzelnen aneinandergereihten Sektionen im Segment (200, 201) abgelegt wird, wobei eine Verknüpfung wenigstens zweier Segmente (200, 201) derart durchgeführt wird, dass in einer Sektion eines ersten Segmentes (200, 201) ein Aussprunglabel aus dem ersten Segment (200) programmiert wird und in einer zweiten Sektion in einem zweiten Segmentes (201) ein Einsprunglabel in das zweiten Segment programmiert wird, wobei vom Aussprunglabel des ersten Segmentes (200) zum Einsprunglabel des zweiten Segmentes (201) übergegangen wird, **dadurch gekennzeichnet, dass** alle Programmteile bzw. Sektionen für Steuerungsfunktionen unverändert.ohne Sprungbefehle bzw. Sprunglabel programmiert werden können, wobei das Aussprunglabel im ersten Segment (200) bzw. das Einsprunglabel in dem zweiten Segment (201) jeweils in einer leeren Sektion programmiert werden.

2. Verfahren nach Anspruch 1, **dadurch gekennzeichnet, dass** eine Sektion im ersten Segment (200) in ihre Gesamtheit dem Aussprunglabel entspricht und eine Sektion im zweiten Segment (201) in ihre Gesamtheit dem Einsprunglabel entspricht, wobei in diesen beiden Sektionen keine Steuerfunktionen in Form von Programmcode abgelegt sind.

3. Verfahren nach Anspruch 1 oder 2, **dadurch gekennzeichnet, dass** das Aussprunglabel in der letzten Sektion oder das Aussprunglabel als Sektion in ihrer Gesamtheit als letzte Sektion des ersten Segmentes (200) programmiert wird.

4. Verfahren nach Anspruch 1 oder 2, **dadurch gekennzeichnet, dass** das Einsprunglabel in der ersten Sektion oder das Einsprunglabel als Sektion in ihrer Gesamtheit als erste Sektion des zweiten Segmentes (201) programmiert wird.

5. Verfahren nach Anspruch 1 und 3, **dadurch gekennzeichnet, dass** im ersten Segment die Sektionen vom Ende des ersten Segmentes (200), beginnend mit dem Aussprunglabel, zum Anfang des ersten Segmentes (200) aneinandergereiht und abgelegt werden.

6. Verfahren nach Anspruch 1 und 4, **dadurch gekennzeichnet, dass** im zweiten Segment die Sektionen vom Anfang des zweiten Segmentes (201), beginnend mit dem Einsprunglabel, zum Ende des zweiten Segmentes (201) aneinandergereiht und abgelegt werden.

7. Verfahren nach Anspruch 1, **dadurch gekennzeichnet, dass** die wenigstens zwei Segmente (200, 201) wenigstens ein Segment (200, 201) als Abstand dazwischen besitzen.

8. Vorrichtung zur Steuerung von Prozessen in einem Fahrzeug, insbesondere zur Steuerung eines Antriebs in dem Fahrzeug, mit wenigstens einem Prozessor (101), der einen Adressraum in wenigstens einem Speicher (102, 202) adressiert und mit dem wenigstens einen Speicher (102, 202), wobei in den Adressraum über wenigstens einen Speicher Steuerfunktionen in Form von Programmcode abgelegt werden, wobei der Adressraum in Segmente (200, 201) gleicher Länge eingeteilt ist und der Programmcode in einzelnen aneinandergereihten Sektionen im Segment (200, 201) abgelegt wird, wobei Mittel vorhanden sind, die eine Verknüpfung wenigstens zweier Segmente (200, 201) derart durchführen, dass in einer Sektion eines ersten Segmentes (200) ein Aussprunglabel aus dem ersten Segment (200) programmiert wird und in einer zweiten Sektion in einem zweiten Segment (201) ein Einsprung label in das zweite Segment (201) programmiert wird, wobei vom Aussprunglabel des ersten Segmentes (200) zum Einsprunglabel des zweiten Segmentes (201) übergegangen wird, **dadurch gekennzeichnet, dass** alle Programmteile bzw. Sektionen für Steuerungsfunktionen unverändert ohne Sprungbefehle bzw. Sprunglabel programmiert werden können, wobei das Aussprunglabel im ersten Segment (200) bzw. das Einsprunglabel in dem zweiten Segment (201) jeweils in einer leeren Sektion programmiert werden.

## Claims

1. Method for controlling processes in a vehicle, in particular for controlling a drive in the vehicle, by means of at least one processor (101), control functions in the form of program code being stored in an address space, which can be addressed via the processor (101), in at least one memory (102, 202), the at least one address space being divided into segments (200, 201) of the same length, and the program code being stored in individual concatenated sections in the segment (200, 201), at least two segments (200, 201) being linked in such a manner that an exit label from a first segment (200) is programmed in a section of the first segment (200, 201) and an entry label to a second segment is programmed in a second section in the second segment (201), the process passing from the exit label of the first segment (200) to the entry label of the second segment (201), **characterized in that** all program parts or sections for control functions can be programmed without change without jump instructions or jump labels, the exit label in the first segment (200) and the entry label in the second segment (201) each being programmed in an empty section.

2. Method according to Claim 1, **characterized in that** a section in the first segment (200) corresponds in its entirety to the exit label and a section in the second segment (201) corresponds in its entirety to the entry label, no control functions in the form of program code being stored in these two sections.

3. Method according to Claim 1 or 2, **characterized in that** the exit label in the last section or the exit label as a section in its entirety is programmed as the last section of the first segment (200).

4. Method according to Claim 1 or 2, **characterized in that** the entry label in the first section or the entry label as a section in its entirety is programmed as the first section of the second segment (201).

5. Method according to Claims 1 and 3, **characterized in that** the sections from the end of the first segment (200), beginning with the exit label, to the start of the first segment (200) are concatenated and stored in the first segment.

6. Method according to Claims 1 and 4, **characterized in that** the sections from the start of the second segment (201), beginning with the entry label, to the end of the second segment (201) are concatenated and stored in the second segment.

7. Method according to Claim 1, **characterized in that** the at least two segments (200, 201) have at least one segment (200, 201) as a spacing between them.

8. Device for controlling processes in a vehicle, in particular for controlling a drive in the vehicle, having at least one processor (101), which addresses an address space in at least one memory (102, 202), and having the at least one memory (102, 202), control functions in the form of program code being stored in the address space via at least one memory, the address space being divided into segments (200, 201) of the same length, and the program code being stored in individual concatenated sections in the segment (200, 201), means being provided and linking at least two segments (200, 201) in such a manner that an exit label from a first segment (200) is programmed in a section of the first segment (200) and an entry label to a second segment (201) is programmed in a second section in the second segment (201), the process passing from the exit label of the first segment (200) to the entry label of the second segment (201), **characterized in that** all program parts or sections for control functions can be programmed without change without jump instructions or jump labels, the exit label in the first segment (200) and the entry label in the second segment (201) each being programmed in an empty section.

## Revendications

1. Procédé de commande de processus dans un véhicule, en particulier de commande de l'entraînement du véhicule, par au moins un processeur (101),
les fonctions de commande qui présentent la forme de codes de programme étant conservées dans un espace d'adressage adressable par le processeur (101) dans au moins une mémoire (102, 202),
le ou les espaces d'adressage étant divisés en segments (200, 201) de même longueur et le code de programme étant conservé dans des sections distinctes successives du segment (200, 201),
une association étant réalisée entre au moins deux segments (200, 201) en programmant dans une section d'un premier segment (200, 201) un indicateur de saut de sortie de boucle du premier segment (200), en programmant dans une deuxième section d'un deuxième segment (201) un indicateur de saut d'entrée en boucle du deuxième segment et en passant de l'indicateur de saut de sortie de boucle du premier segment (200) à l'indicateur de saut d'entrée en boucle du deuxième segment (201),
**caractérisé en ce que**
toutes les parties de programme et sections de fonctions de programme peuvent être programmées en restant inchangées, sans commande de saut ou indicateur de saut, l'indicateur de saut de sortie de boucle et l'indicateur de saut d'entrée en boucle étant programmés dans une section vide respectivement du premier segment (200) et du deuxième segment (201).

2. Procédé selon la revendication 1, **caractérisé en ce que** la totalité d'une section du premier segment (200) correspond à l'indicateur de saut de sortie de boucle et la totalité d'une section du deuxième segment (201) correspond à l'indicateur de saut d'entrée en boucle, aucune fonction de commande n'étant conservée sous forme de code de programme dans ces deux sections.

3. Procédé selon les revendications 1 ou 2, **caractérisé en ce que** l'indicateur de saut de sortie de boucle est programmé dans la dernière section ou **en ce que** l'indicateur de saut de sortie de boucle est programmé dans sa totalité comme dernière section du premier segment (200).

4. Procédé selon les revendications 1 ou 2, **caractérisé en ce que** l'indicateur de saut d'entrée en boucle est programmé dans la première section ou **en ce que** l'indicateur de saut d'entrée en boucle est programmé dans sa totalité comme section comme première section du deuxième segment (201).

5. Procédé selon les revendications 1 et 3, **caractérisé en ce que** dans le premier segment, les sections sont rangées et conservées depuis l'extrémité du premier segment (200) en commençant par l'indicateur de saut de sortie de boucle jusqu'au début du premier segment (200).

6. Procédé selon les revendications 1 et 4, **caractérisé en ce que** dans le deuxième segment, les sections sont rangées et conservées depuis l'entrée du deuxième segment (201) en commençant avec l'indicateur de saut d'entrée en boucle jusqu'à l'extrémité du deuxième segment (201).

7. Procédé selon la revendication 1, **caractérisé en ce que** les deux ou plusieurs segments (200, 201) possèdent au moins un segment (200, 201) qui sert de distance les séparant.

8. Dispositif de commande de processus dans un véhicule, en particulier de commande d'un entraînement du véhicule, présentant
au moins un processeur (101) qui adresse à l'espace d'adressage d'au moins une mémoire (102, 202) et
au moins une mémoire (102, 202),
des fonctions de commande qui présentent la forme de code de programme étant conservées dans l'espace d'adressage par l'intermédiaire d'au moins une mémoire, l'espace d'adressage étant divisé en segments (200, 201) de même longueur et le code de programme étant conservé dans le segment (200, 201) en sections distinctes successives,
des moyens étant prévus pour exécuter une association entre au moins deux segments (200, 201) en programmant dans une section d'un premier segment (200) un indicateur de saut de sortie de boucle du premier segment (200), en programmant dans une deuxième section d'un deuxième segment (201) un indicateur de saut d'entrée en boucle du deuxième segment (201) et en passant de l'indicateur de saut de sortie de boucle du premier segment (200) à l'indicateur de saut d'entrée en boucle du deuxième segment (201),
**caractérisé en ce que**
toutes les parties de programme et sections de fonctions de programme peuvent être programmées en restant inchangées, sans commande de saut ou indicateur de saut, l'indicateur de saut de sortie de boucle et l'indicateur de saut d'entrée en boucle étant programmés dans une section vide respectivement du premier segment (200) et du deuxième segment (201).
